# EUROPEAN PATENT SPECIFICATION

(11) **EP 2 549 313 B1**
(45) Date of publication and mention of the grant of the patent: **01.07.2020**
(21) Application number: 11174676.4
(22) Date of filing: 20.07.2011
(51) Int. Cl.: G02B 6/36, G02B 6/38, G02B 6/42

(54) **Ferrule with integrated fiber alignment**
Presshülse mit integrierter Faserausrichtung
Embout doté d'un alignement de fibres intégré

(43) Date of publication of application: 23.01.2013
(73) Proprietor: CommScope Connectivity Belgium BVBA, 3010 Kessel-Lo (BE)
(72) Inventor: Verheyden, Danny, B-3200 Gelrode (BE); Mattheus, Walter, B-3010 Kessel-Lo (BE); Watte, Jan, B-1851 Grimbergen (BE); Vits, Paul, 3390 Tielt-Winge (BE)
(74) Representative: Patentanwälte Bressel und Partner mbB

(56) References cited:
- EP-A2- 0 188 392
- EP-A2- 1 237 020
- US-A- 4 047 796
- US-A- 4 824 197
- US-A- 5 909 528
- US-A1- 2009 269 014

## Description

### FIELD OF THE INVENTION

The present invention relates to a device and a method for aligning an optical fiber to an optical device. The present invention particularly relates to a device and a method for aligning and connecting ferrule-less optical fiber systems to systems suitable for ferruled optical fiber systems.

### BACKGROUND TO THE INVENTION

Optical fiber connectors are an essential part of substantially all optical fiber communication systems. For instance, such connectors are used to join segments of fiber into longer lengths, to connect fiber to active devices such as radiation sources, detectors and repeaters, and to connect fiber to passive devices such as switches and attenuators. The principal function of an optical fiber connector is to hold a fiber end such that the core of the fiber is axially aligned with the optical pathway of the component to which the connector is mating (e.g., another fiber, a waveguide, an opto-electric device). This way, all of the light from the fiber is optically coupled to the other component. It is well known that to effect optical coupling and minimize Fresnel loss, there must be sufficient "physical contact" between the optical pathway medium, which, in the case of optical connectors, is generally fiber.

To effect physical contact, traditionally optical connectors have employed "ferrules." Ferrules are well-known components which hold one or more fibers such that the end faces of the fibers are presented for optical coupling. Ferrule connectors typically bias the ferrule forward such that, when the connector is mated to another connector or mating component, a mating face of the ferrule urges against the mating component to physically contact the fiber end faces with the optical pathway of the mating component. Although ferrules generally facilitate good fiber manageability and result in connections with low Fresnel losses, the ferrule itself has a number of shortcomings.

One such shortcoming is the need to polish the mating face of the ferrule to exacting parameters to ensure physical contact is made with the mating component. Polishing with such stringent requirements tends to be costly and prone to reworking and waste, thereby lowering yields. The problems associated with polishing the ferrule are exasperated in multi-fiber ferrules which are more complicated to polish.

Another shortcoming of using a ferrule in an optical connector is its inherent bulk that must be accommodated within the connector. To provide a purchase point for the fiber and adequately protect the fiber end, most ferrules have a certain amount of bulk which must be accommodated by the connector. In single fiber ferrules, this bulk can negatively affect the minimum center line distance between fibers, which is particularly problematic as the need for fiber density increases.

Given the shortcomings of ferrule connectors, of which their cost is an important element, ferrule-less type connectors were developed. For example, US patents 5694506 and 6951425 disclose ferrule-less type connectors and ways to mate the ferrule-less optical fiber ends.

Very many optical fiber systems still do use ferrules, and therefore it is important to be able to connect ferrule-less optical fiber systems to ferruled systems.

US patent 5909528 discloses an optical fiber connector that includes a ferrule that has a built-in optical fiber stub and a cut-away portion, the fiber stub projecting into the cut-away portion. The projecting end is aligned with the bare end of a ferrule-less optical, fiber, using a support member and, after the alignment, the support member is locked in place by a locking member, by a field technician effectuating the connection.

EP 1 237 020 A2 disclose a method for coupling end faces of plastic optical fibers, and a plastic optical fiber unit obtainable by the method.

US 4,824,197 A discloses optical fiber splicing elements and in one aspect to an improved optical fiber centering and holding device to afford the splicing of and alignment of ends of optical fibers. On the other hand US 2009/269014 A1 is directed to an optical connector. In addition US 4,047,796 A relates to optical fiber connectors and particularly to a novel adjustable connector assembly for precisely aligning fiber ends.

The EP 0 188 392 A2 teaches a device for aligning an optical fiber, said device comprising an alignment portion for receiving a bare end of the optical fiber, and wherein said alignment portion comprises elastic means, said elastic means exerting a force on said common channel and said elastic means adapted for opening said common channel when a force is exerted by insertion of the bare and of the optical fiber in said common channel.

There is still a need for an improved alignment device and method to align and to connect ferrule-less optical fiber systems to systems suitable for ferruled optical fiber systems.

### SUMMARY OF THE INVENTION

It is an object of the present invention to provide a device and a method for aligning a ferrule-less optical fiber to an optical device, that is suitable for ferruled optical fiber systems.

The invention is a device with the features of claim 1 and a method with the steps of claim 12.

A device is provided for aligning an optical fiber, said device comprising a ferrule and an alignment portion for receiving a bare end of the optical fiber, wherein said ferrule and said alignment portion have a common channel, said ferrule comprising in said common channel a fiber stub for being aligned with the bare end of the optical fiber, and wherein said alignment portion comprises an elastic element adapted for opening said common channel, against a force exerted by said elastic element, by a force exerted by insertion of the bare end of the optical fiber in said common channel.

The device comprises a ferrule that includes a fiber stub. One end of the fiber stub, that preferably has a bare end, is to be aligned, in the alignment portion of the device, with the bare end of an optical fiber of a ferrule-less fiber optical system; this alignment is done in an alignment portion of the device. The other, opposite end may, via the ferrule of the device, be aligned with any optical device that is suitable for being aligned with a ferrule. Such an optical device may be a ferruled optical fiber, or a light source such as a LED suitable to be aligned with a ferruled optical fiber, or another such suitable optical device as known in the art.

The device comprises a common channel, that comprises the fiber stub, and that is suitable for receiving the bare end of the optical fiber that is to be aligned to the fiber stub.

A method for aligning an optical fiber having a bare end comprises inserting the bare end in an alignment portion of a device, by exerting a force on the optical fiber, thus opening a common channel of said alignment portion and of a ferrule of said device, against an elastic force on said common channel, exerted by an elastic element in said alignment portion; and aligning the bare end with a fiber stub in said ferrule of said device, wherein said fiber stub is located in said common channel.

The term "fiber" as used herein relates to a single, optical transmission element having a core usually having a diameter of 8 µm for single-mode and of 50 to 62,5 µm for multi-mode fibers, and a cladding usually having a diameter of 125 µm, wherein the core is the central, light-transmitting region of the fiber, and the cladding is the material surrounding the core to form a guiding structure for light propagation within the core. The core and cladding can be coated with a primary coating usually comprising one or more organic or polymer layers surrounding the cladding to provide mechanical and environmental protection to the light transmitting region. The primary coating may have a diameter ranging e.g. between 200 and 300 µm. The core, cladding and primary coating usually are coated with a secondary coating, a so-called "buffer", a protective polymer layer without optical properties applied over the primary coating. The buffer or secondary coating usually has a diameter ranging between 300-1100 µm, depending on the cable manufacturer.

It the coating layer or layers are removed at the end of the fiber over a certain length, so that only the core and cladding remain bare, the end of the fiber is "bare" as this is called in this document.

The term "light" as used herein relates to electromagnetic radiation, which comprises a part of the electromagnetic spectrum that is classified by wavelength into infrared, the visible region, and ultraviolet.

The term "pressured" relates to an applied pressure. When a pressure is applied to a material of a certain volume it is not necessary so that the volume of the material will decrease. Any volume change after pressure applied depends on the properties of the material of a certain volume (for instance the Poisson-ratio).

The term "flat element" relates to an element comprising at least a flat two-dimensional surface. Another example of a flat element is a flat element comprising a flat two-dimensional surface and a deflecting portion. A rectangular beam or a U groove alignment structure with straight legs as known in the art (for instance as disclosed by Rosa et al in IEEE journal of selected topics in quantum electronics, 5(5), p.1249 (1999)) can also be considered as a flat element.

The term "floating" relates to moving freely and not fixed in one position, place or level. A floating element is an element which is connected or constructed so as to operate and adjust smoothly.

In one embodiment of an alignment portion of the device, the common channel of the ferrule and the alignment portion is formed in the alignment portion by a V-groove element and by a flat element. The V-groove element may be tapered at its first side, where it is to receive the bare end of the optical fiber, and it may be tapered at its second, opposite side as well. The tapering may assist in receiving and positioning the optical fibers that are to be aligned. The flat element can be tapered at the first side of the flat element and at the second opposite side of the flat element. Once more tapering assists in placing and positioning the fiber within the flat element.

Preferably, for both alignment elements, for instance the V-groove and the flat element, the tapering is designed in such way that when a fiber enters the channel, the entrance of the channel is larger than the fiber diameter and becomes narrower deeper inside the channel, to change to a section of about the same size as the size of the bare end of the fiber.

Preferably the alignment elements in the alignment portion, in this embodiment the V-groove element and the flat element, are such that a portion of the bare end of the optical fiber contacts the alignment elements over three line contacts parallel to the axis of the bare end of the optical fiber, when the bare end is inserted in the device. When a cylinder, like for instance a portion of a bare end of an optical fiber, is pressed against a plane like for instance the plane of the flat element, the resulting contact area is a line parallel to the axis of the cylinder, therefore the term line contact. When, like in the above described embodiment, the portion of the bare end is pressed against a V-groove, two line contacts are formed, one for each edge of the V-groove. It is not necessary that the portion of the optical fiber which is in contact with the alignment element is the same for each alignment element, but preferably there is an overlap so that the alignment elements contact a specific portion of the bare end of the optical fiber over three line contacts, parallel to the axis of the bare end of the optical fiber.

In another embodiment, the alignment portion comprises at least two alignment elements.

In yet another embodiment of the invention, three parallel cylindrical rods are provided such that a channel is defined, wherein three line contacts parallel to the axis of the bare end of the optical fiber are formed when the bare end is inserted in the channel, each line contact resulting from contact between a portion of the bare end and one cylindrical rod.

In some embodiments of the invention, the device comprises an elastic element. For instance, a leaf spring may be used, but other resilient elements may be used as well. A leaf spring is a simple type of spring, commonly used for bringing an area under pressure. The elastic means may be attached directly to the flat element. The elastic element may be adapted for opening the common channel, against the force exerted by the elastic element, by a force exerted by inserting the bare end of the optical fiber in the common channel. In the embodiment discussed above wherein a V-groove element and a flat element are used, the flat element may be urged towards the V-groove element by the elastic means. In another embodiment, the elastic means may urge the V-groove element towards the flat element. When the bare end of the optical fiber is inserted into an alignment portion wherein the flat element is urged elastically towards the V-groove element, the flat element is lifted. The channel formed by the alignment elements is opened by the force exerted by inserting the bare end, and the flat element is in a floating state, and thus able to move, and to guide the bare end into the V-groove. The elastic element can be such that a first alignment element of the alignment portion is urged relative to a second alignment element. This can be done for instance by applying an elastic element surrounding two alignment elements, for instance by using a U-shaped leaf spring. In other embodiments, an alignment element can be integrated in an elastic element.

In another embodiment, the common channel is defined in the alignment portion by a V-groove element and two subsequent flat elements. Whereas in embodiments discussed hereinbefore one common flat element is used as alignment element for the fiber stub and the bare end of the optical fiber that are to be aligned, in this embodiment each bare end is aligned by its own flat element. The flat elements can be pressured by two different elastic elements.

Advantageously, when aligning the bare end of the optical fiber to the fiber stub, the bare end is under a low force as a result of the elastic element and therefore the brittle optical fiber will not easily be damaged. As an additional advantageous result several connections and disconnections are possible. In addition, by using a floating element, the fiber is guided into the groove. This operation of guiding the fiber within the groove using a floating element is accomplished passively, i.e. the alignment is performed by just inserting the optical fiber. In a preferred embodiment of the invention, the alignment device, and the alignment method, thus work on a self-aligning principle. Therefore, even if the alignment is done by an operator, the alignment is highly independent from the skills of the operator doing the alignment and/or connection. Further, the alignment may easily be done automatically, e.g. in an automatic device, since it is self-aligning.

In accordance with the invention, an index matching material, such as an index matching gel, may be present in the common channel. The index matching gel improves the optical connection between the bare end of the inserted optical fiber and the fiber stub.

The index matching gel preferably has an index of refraction that closely approximates that of an optical fiber is used to reduce Fresnel reflection at the surface of the bare optical fiber ends. Without the use of an index-matching material, Fresnel reflections will occur at the smooth end faces of a fiber and reduce the efficiency of the optical connection and thus of the entire optical circuit.

A sealing element may be used in embodiments according to the invention. A sealing element preferably includes a self-healing member. Such a sealing element may have the following functions: a sealing function, a cleaning function, and a light-blocking or, in general, a light attenuation function, for eye protection. Which functions a particular embodiment of a sealing element has, is determined by the characteristics of the embodiment, especially by the properties of the material that is used for the self-healing member of the sealing element. Advantageously the sealing element may keep, together with parts of the device, the inserted optical fiber isolated from the outside world, so that the optical fiber is protected from contamination by e.g. dust and dirt, i.e. is sealed. The sealing element may further comprise a self-healing member; when the bare end of the optical fiber pierces the self-healing member of the sealing element, the bare end pushes away the material of the self-healing member. This material encloses the bare end, since it is self-healing, i.e. after retracting the bare end, the space left by the retracted end is closed automatically. Dust, dirt or other contaminants possibly present on the end face of the bare end may then be caught in the self-healing member, thus cleaning the end face of the bare end of the optical fiber.

In some embodiments, the device may further comprise a pre-alignment element for pre-aligning the optical fiber that is to be inserted. The pre-alignment element may include a conical opening, into which the bare end of the optical fiber is inserted before reaching the alignment portion.

Embodiments of a device in accordance with the invention may have several advantages.

A very reliable alignment and connection may be obtained. The alignment portion may be integrated in the ferrule, so that the required space is very reduced. In one embodiment, for an SC-ferrule, a length of 10,5 mm and a diameter of 2,5 mm are sufficient. The device is self-aligning. Connection in the field is easy and convenient. Many connections and disconnections (tens of connections/disconnections) are possible.

### BRIEF DESCRIPTION OF THE DRAWINGS

Further features of the present invention will become apparent from the drawings, wherein:
FIG. 1 shows an exploded view of an embodiment of a device in accordance with the invention;
FIG. 2a is a schematic representation of an embodiment of an alignment portion of a device according to the invention, viewed perpendicularly to the fiber axis;
FIG. 2b is a schematic representation of another embodiment of an alignment portion of a device according to the invention;
FIG. 3 shows an exploded view of another embodiment of a device in accordance with the invention;
FIG. 4 shows yet another embodiment of a device in accordance with the invention, wherein an alignment element is integrated in the elastic element.

### DETAILED DESCRIPTION OF PREFERRED EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

In the drawings, like reference numerals indicate like features; and, a reference numeral appearing in more than one figure refers to the same element. The drawings and the following detailed descriptions show specific embodiments of an alignment system.

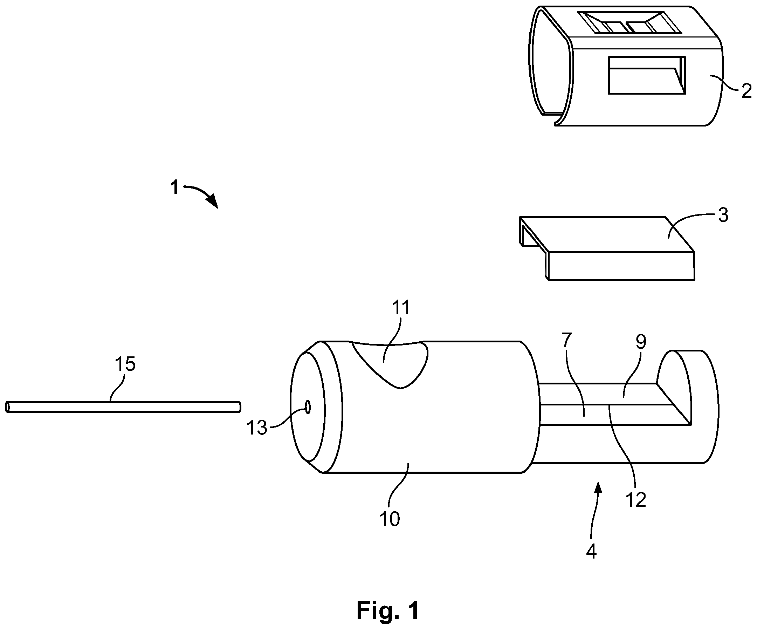

Fig. 1 illustrates an embodiment of a device in accordance with the invention. The device 1 includes a ferrule 10 and an alignment portion 4 (as mentioned already, the alignment portion may be integrated in the ferrule). In the embodiment shown in Fig. 1, the alignment portion includes two alignment elements, a flat element 3 and a V-groove element 7, and the V-groove element 7 is not a separate element but is integrated in the body of the alignment portion 4. The flat element 3 is urged towards the V-groove by elastic element 2. The bare end 12 of the optical fiber is in V-groove 7. A fiber stub 15 is shown outside of device 1, for clarity. This fiber stub is inserted in opening 13 of the common channel 9 of the ferrule 10 and the alignment portion 4, and it is fixed in the ferrule. Fixing may be done by applying an adhesive through opening 11 of ferrule 10, or an adhesive may be applied to the fiber stub 15 before it is inserted into opening 13. Preferably, the length of the fiber stub is such that after inserted one end is located approximately in the middle of the alignment portion 4, where it is to be aligned with the bare end 12 of the optical fiber, while its other end is flush with opening 13, where it is usually polished (which operation is done in the factory e.g., not in the field) so that it can be aligned to an optical device suitable to be aligned to a ferruled optical fiber system. Preferably, the alignment elements of the alignment portion 4 are such that alignment of the fiber stub to the bare end of the optical fiber includes contacting the fiber stub 15 over a set of three line contacts parallel to the axis of the fiber stub.

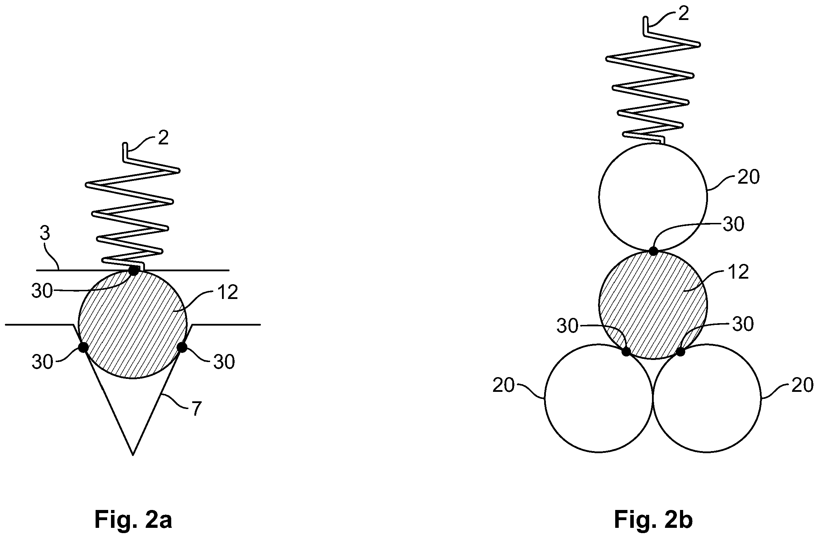

Fig. 2a schematically shows the urging of a flat element 3 towards a V-groove element 7 by elastic element 2. The channel is defined by the flat element 3 and the V-groove element 7 and the urging results in contact of a portion of the bare end 12 of the fiber against the flat element 3; the resulting contact area is a line contact 30 parallel to the axis of the bare end. The bare end 12 is pressed against the V-groove element 7 and two line contacts 30 are formed, one for each edge of the V-groove element 7. As Fig. 2a is a schematic representation in a plane perpendicular to the axis of the bare end 12, the three line contacts 30 are represented as three contact points. Fig. 2b is also the schematic representation of an embodiment in a plane perpendicular to the axis of the bare end 12, wherein the channel of the alignment elements is defined by three cylindrical rods 20, instead of by a flat element and a V-groove element.

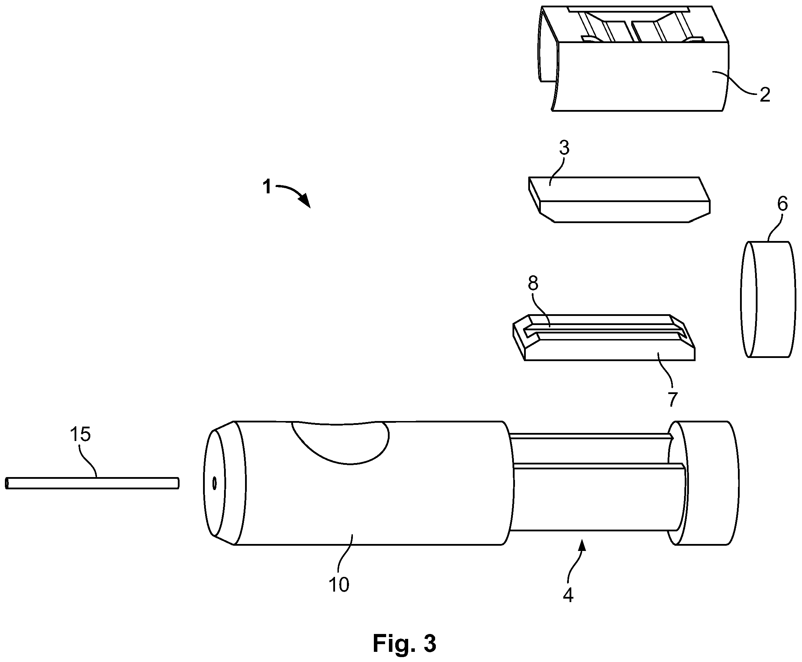

Fig. 3 shows an exploded view of another embodiment that is similar to the embodiment illustrated in Fig. 1. However, in the embodiment of Fig. 3 a separate V-groove element is used, that is placed in the body of the alignment portion 4. The V-groove is tapered, as shown by tapering 8. Further, in this embodiment a self-healing member 6 is used. The self-healing member 6 has a cylindrical shape in the embodiment of Fig. 3, as has the device 1, and is placed in the device so that the axis of the self-healing member coincides with the common channel of the ferrule and the alignment portion, which channel coincides with the axis of the device. When inserting a bare end of an optical fiber into the device, first the self-healing member 6 is pierced by the bare end, and then the bare end enters the alignment portion 4 of the device, where it is aligned to the fiber stub 15. As discussed above, in this way contamination of the alignment portion is avoided. A housing, not shown, may enclose the alignment portion and the self-healing member, leaving an opening to insert the bare end of the optical fiber; this housing further shields the alignment portion from the outside environment.

The self-healing member may e.g. be a cold-applied, pre-cured silicone gel, e.g. Dow Corning GT-4201. Preferably the self-healing member 6 may have a thickness of 1.5 mm. If GT-4201 is used, it may be pressured such that the thickness is e.g. 1 mm after pressuring.

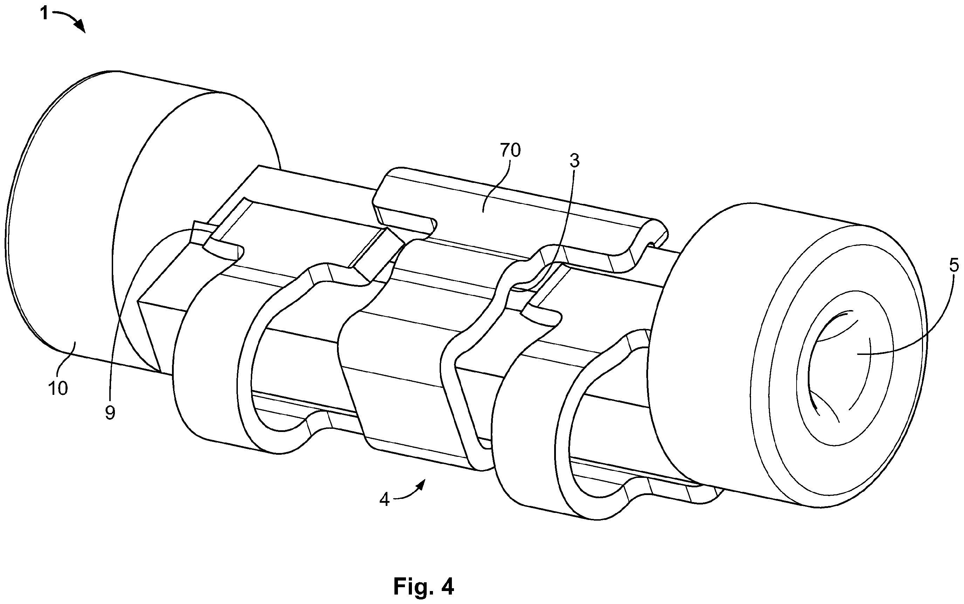

Fig. 4 shows another embodiment of a device in accordance with the invention. This embodiment includes a different kind of elastic element 70, that is adapted for directly contacting the bare end of the optical fiber, when the bare end is inserted in the common channel 9 of the alignment portion 4 and the ferrule 10 of the device 1. In the shown embodiment, a flat alignment element 3 is integrated in the elastic element 70. Further, in Fig. 3 the V-groove element is integrated in the body of the alignment portion 4, as is the case in the embodiment of Fig. 1.

Further, this embodiment of device 1 has a pre-alignment element 5, which is in Fig. 4 a conical opening for receiving the bare end 12 of the optical fiber. At the other end of the device 1, the ferrule 10 may be provided with a V-groove in the channel 9, to receive the fiber stub 15 in the V-groove.

It is to be understood that this invention is not limited to the particular features of the means and/or the process steps of the methods described as such means and methods may vary. It is also to be understood that the terminology used herein is for purposes of describing particular embodiments only, and is not intended to be limiting. It must be noted that, as used in the specification and the appended claims, the singular forms "a" "an" and "the" include singular and/or plural referents unless the context clearly dictates otherwise. It is also to be understood that plural forms include singular and/or plural referents unless the context clearly dictates otherwise. It is moreover to be understood that, in case parameter ranges are given which are delimited by numeric values, the ranges are deemed to include these limitation values.

The invention is defined by the appended claims.

## Claims

1. A device (1) for aligning an optical fiber, said device comprising a ferrule (10) and an alignment portion (4) for receiving a bare end (12) of the optical fiber, wherein said ferrule (10) and said alignment portion (4) have a common channel (9), said ferrule comprising in said common channel (9) a fiber stub (15) for being aligned with the bare end (12) of the optical fiber, wherein said alignment portion (4) comprises elastic means (2), said elastic means (2) exerting a force on said common channel (9) and said elastic means (2) adapted for opening said common channel (9) when a force is exerted by insertion of the bare end (12) of the optical fiber in said common channel (9), wherein said alignment portion comprises at least two alignment elements (3,7) forming said common channel (9), and wherein said at least two alignment elements are adapted for contacting a portion of the fiber stub (15) and a portion of the bare end (12) of the optical fiber when the bare end is inserted in said common channel, resulting in three line contacts (30) parallel to an axis of the bare end (12) of the optical fiber.

2. Device according to claim 1 wherein said alignment portion (4) is integrated in said ferrule (10).

3. Device according to claim 1 or claim 2 further comprising an index matching material in said common channel.

4. Device according to any one of claims 1 to 3 wherein said at least two alignment elements are adapted for contacting a portion of said fiber stub over a set of three line contacts parallel to an axis of the fiber stub.

5. Device according to any one of claims 1 to 4 wherein said at least two alignment elements (3, 7) comprise a flat element (3).

6. Device according to claim 5 wherein said flat element is for being urged by said elastic means against said portion of said fiber stub and against the portion of the bare end.

7. Device according to any one of claims 1 to 6 wherein said at least two alignment elements (3, 7) comprise a V-groove element (7).

8. Device according to any one of the preceding claims wherein said elastic means is adapted for directly contacting the bare end of the optical fiber.

9. Device according to claim 8 when dependent on claim 5 wherein said flat element (3) is integrated in said elastic means (70).

10. Device according to any one of the preceding claims wherein said common channel comprises a V-groove in said ferrule.

11. Device according to any one of the preceding claims wherein said fiber stub is for being connected with the bare end of the optical fiber.

12. Method for aligning an optical fiber having a bare end (12), the method comprising the steps of:
- inserting the bare end (12) in an alignment portion (4) of a device (1), by exerting a force on the optical fiber, said optical fiber thus opening a common channel (9) of said alignment portion (4) and of a ferrule (10) of said device (1), and said optical fiber exerting a force against an elastic force on said common channel, said elastic force on said common channel exerted by an elastic element (2) in said alignment portion (4);
- aligning the bare end (12) with a fiber stub (15) in said ferrule (10) of said device (1), wherein said fiber stub (15) is located in said common channel (9); and
- contacting a portion of the fiber stub (15) and a portion of the bare end (12) over three line contacts (30) with at least two alignment elements (3,7) of said alignment portion (4).

13. Method according to claim 12 wherein said at least two alignment elements (3,7) comprise a V-groove element (7) and a flat element (3), the method further comprising urging said flat element towards said V-groove element by said elastic element (2).

## Patentansprüche

1. Vorrichtung (1) zum Ausrichten einer optischen Faser, wobei die Einrichtung eine Ferrule (10) und einen Ausrichtungsabschnitt (4) zum Aufnehmen eines bloßen Endes (12) der optischen Faser umfasst, wobei die Ferrule (10) und der Ausrichtungsabschnitt (4) einen gemeinsamen Kanal (9) aufweisen, wobei die Ferrule in dem gemeinsamen Kanal (9) einen Faserstummel (15) umfasst, der mit dem bloßen Ende (12) der optischen Faser ausgerichtet werden soll, wobei der Ausrichtungsabschnitt (4) ein elastisches Mittel (2) umfasst, wobei das elastische Mittel (2) eine Kraft an dem gemeinsamen Kanal (9) ausübt und das elastische Mittel (2) zum Öffnen des gemeinsamen Kanals (9) ausgebildet ist, wenn eine Kraft durch das Einführen des bloßen Endes (12) der optischen Faser in den gemeinsamen Kanal (9) ausgeübt wird, wobei der Ausrichtungsabschnitt mindestens zwei Ausrichtungselemente (3, 7) umfasst, die den gemeinsamen Kanal (9) bilden, und wobei die mindestens zwei Ausrichtungselemente zum Kontaktieren eines Abschnitts des Faserstummels (15) und eines Abschnitts des bloßen Endes (12) der optischen Faser ausgebildet sind, wenn das bloße Ende in den gemeinsamen Kanal eingeführt wird, was zu drei Leitungskontakten (30) parallel zu einer Achse des bloßen Endes (12) der optischen Faser führt.

2. Vorrichtung nach Anspruch 1, wobei der Ausrichtungsabschnitt (4) in der Ferrule (10) integriert ist.

3. Vorrichtung nach Anspruch 1 oder Anspruch 2, die ferner ein Indexanpassungsmaterial in dem gemeinsamen Kanal umfasst.

4. Vorrichtung nach einem der Ansprüche 1 bis 3, wobei die mindestens zwei Ausrichtungselemente zum Kontaktieren eines Abschnitts des Faserstummels über einen Satz von drei Leitungskontakten parallel zu einer Achse des Faserstummels ausgebildet sind.

5. Vorrichtung nach einem der Ansprüche 1 bis 4, wobei die mindestens zwei Ausrichtungselemente (3, 7) ein flaches Element (3) umfassen.

6. Vorrichtung nach Anspruch 5, wobei das flache Element durch das elastische Mittel gegen den Abschnitt des Faserstummels und gegen den Abschnitt des bloßen Endes gedrängt werden soll.

7. Vorrichtung nach einem der Ansprüche 1 bis 6, wobei die mindestens zwei Ausrichtungselemente (3, 7) ein V-Nut-Element (7) umfassen.

8. Vorrichtung nach einem der vorangegangenen Ansprüche, wobei das elastische Mittel zum direkten Kontaktieren des bloßen Endes der optischen Faser ausgebildet ist.

9. Vorrichtung nach Anspruch 8, wenn von Anspruch 5 abhängig, wobei das flache Element (3) in das elastische Mittel (70) integriert ist.

10. Vorrichtung nach einem der vorangegangenen Ansprüche, wobei der gemeinsame Kanal eine V-Nut in der Ferrule umfasst.

11. Vorrichtung nach einem der vorangegangenen Ansprüche, wobei der Faserstummel mit dem bloßen Ende der optischen Faser verbunden werden soll.

12. Verfahren zum Ausrichten einer optischen Faser, die ein bloßes Ende (12) aufweist, wobei das Verfahren die folgenden Schritte umfasst:
Einführen des bloßen Endes (12) in einen Ausrichtungsabschnitt (4) einer Vorrichtung (1) durch Ausüben einer Kraft an der optischen Faser, wobei die optische Faser somit einen gemeinsamen Kanal (9) des Ausrichtungsabschnitts (4) und einer Ferrule (10) der Vorrichtung (1) öffnet, und die optische Faser eine Kraft gegen eine elastische Kraft an dem gemeinsamen Kanal ausübt, wobei die elastische Kraft an dem gemeinsamen Kanal durch ein elastisches Element (2) in dem Ausrichtungsabschnitt (4) ausgeübt wird;
Ausrichten des bloßen Endes (12) mit einem Faserstummel (15) in der Ferrule (10) der Vorrichtung (1), wobei sich der Faserstummel (15) in dem gemeinsamen Kanal (9) befindet; und
Kontaktieren eines Abschnitts des Faserstummels (15) und eines Abschnitts des bloßen Endes (12) über drei Leitungskontakte (30) mit mindestens zwei Ausrichtungselementen (3, 7) des Ausrichtungsabschnitts (4).

13. Verfahren nach Anspruch 12, wobei die mindestens zwei Ausrichtungselemente (3, 7) ein V-Nut-Element (7) und ein flaches Element (3) umfassen, wobei das Verfahren ferner Drängen des flachen Elements in Richtung des V-Nut-Elements durch das elastische Element (2) umfasst.

## Revendications

1. Dispositif (1) destiné à aligner une fibre optique, ledit dispositif comprenant une ferrule (10) et une partie d'alignement (4) destinées à recevoir une extrémité nue (12) de la fibre optique, ladite ferrule (10) et ladite partie d'alignement (4) ayant un canal commun (9), ladite ferrule comprenant dans ledit canal commun (9) un bout de fibre (15) destiné à être aligné avec l'extrémité nue (12) de la fibre optique, ladite partie d'alignement (4) comprenant des moyens élastiques (2), lesdits moyens élastiques (2) exerçant une force sur ledit canal commun (9) et lesdits moyens élastiques (2) étant adaptés pour ouvrir ledit canal commun (9) quand une force est exercée par insertion de l'extrémité nue (12) de la fibre optique dans ledit canal commun (9), ladite partie d'alignement comprenant au moins deux éléments d'alignement (3, 7) formant ledit canal commun (9), et lesdits au moins deux éléments d'alignement étant adaptés pour entrer en contact avec une partie du bout de fibre (15) et une partie de l'extrémité nue (12) de la fibre optique quand l'extrémité nue est insérée dans ledit canal commun, ce qui se solde par trois contacts linéaires (30) parallèles à un axe de l'extrémité nue (12) de la fibre optique.

2. Dispositif selon la revendication 1 dans lequel ladite partie d'alignement (4) est intégrée dans ladite ferrule (10).

3. Dispositif selon la revendication 1 ou la revendication 2 comprenant en outre un matériau d'adaptation d'indice dans ledit canal commun.

4. Dispositif selon l'une quelconque des revendications 1 à 3 dans lequel lesdits au moins deux éléments d'alignement sont adaptés pour entrer en contact avec une partie dudit bout de fibre sur un ensemble de trois contacts linéaires parallèles à un axe du bout de fibre.

5. Dispositif selon l'une quelconque des revendications 1 à 4 dans lequel lesdits au moins deux éléments d'alignement (3, 7) comprennent un élément plat (3).

6. Dispositif selon la revendication 5 dans lequel ledit élément plat est destiné à être poussé par lesdits moyens élastiques contre ladite partie dudit bout de fibre et contre la partie de l'extrémité nue.

7. Dispositif selon l'une quelconque des revendications 1 à 6 dans lequel lesdits au moins deux éléments d'alignement (3, 7) comprennent un élément à rainure en V (7).

8. Dispositif selon l'une quelconque des revendications précédentes dans lequel lesdits moyens élastiques sont adaptés pour entrer en contact direct avec l'extrémité nue de la fibre optique.

9. Dispositif selon la revendication 8 lorsqu'elle est dépendante de la revendication 5 dans lequel ledit élément plat (3) est intégré dans lesdits moyens élastiques (70).

10. Dispositif selon l'une quelconque des revendications précédentes dans lequel ledit canal commun comprend une rainure en V dans ladite ferrule.

11. Dispositif selon l'une quelconque des revendications précédentes dans lequel ledit bout de fibre est destiné à être relié à l'extrémité nue de la fibre optique.

12. Procédé d'alignement d'une fibre optique ayant une extrémité nue (12), le procédé comprenant les étapes suivantes :
- insérer l'extrémité nue (12) dans une partie d'alignement (4) d'un dispositif (1), en exerçant une force sur la fibre optique, ladite fibre optique ouvrant ainsi un canal commun (9) de ladite partie d'alignement (4) et d'une ferrule (10) dudit dispositif (1), et ladite fibre optique exerçant une force opposée à une force élastique sur ledit canal commun, ladite force élastique sur ledit canal commun étant exercée par un élément élastique (2) dans ladite partie d'alignement (4) ;
- aligner l'extrémité nue (12) avec un bout de fibre (15) dans ladite ferrule (10) dudit dispositif (1), ledit bout de fibre (15) étant situé dans ledit canal commun (9) ; et
- mettre en contact une partie du bout de fibre (15) et une partie de l'extrémité nue (12) sur trois contacts linéaires (30) avec au moins deux éléments d'alignement (3, 7) de ladite partie d'alignement (4).

13. Procédé selon la revendication 12 dans lequel lesdits au moins deux éléments d'alignement (3, 7) comprennent un élément à rainure en V (7) et un élément plat (3), le procédé comprenant en outre la poussée dudit élément plat vers ledit élément à rainure en V par ledit élément élastique (2).
